# EUROPÄISCHE PATENTSCHRIFT

(11) **EP 1 782 721 B1**
(45) Veröffentlichungstag und Bekanntmachung des Hinweises auf die Patenterteilung: **29.07.2015**
(21) Anmeldenummer: 06123363.1
(22) Anmeldetag: 02.11.2006
(51) Int. Cl.: A47K 3/16, A47K 3/40, E03F 5/04

(54) **Duschtassenelement mit einer Ablaufrinne**
Shower tray with outlet gutter
Bac de douche avec gouttière

(30) Priorität: 02.11.2005 DE 202005017218 U; 01.12.2005 DE 202005018838 U; 08.02.2006 DE 202006002077 U; 07.03.2006 DE 202006003720 U
(43) Veröffentlichungstag der Anmeldung: 09.05.2007
(73) Patentinhaber: VIEGA GmbH & Co. KG, 57439 Attendorn (DE)
(72) Erfinder: Schäfer, Patrick, 58095 Hagen (DE); Arens, Klaus, 57482 Wenden (DE)
(74) Vertreter: Cohausz & Florack

(56) Entgegenhaltungen:
- EP-A- 0 333 168
- WO-A-2005/077235
- DE-A1- 10 131 338
- DE-A1- 10 306 120
- GB-A- 2 270 836
- US-B1- 6 178 571

## Beschreibung

Die Erfindung betrifft ein Duschtassenelement mit einem plattenförmigen Trägerelement aus Schaumstoff, insbesondere Hartschaumstoff, und einer Duschrinne eingesetzt im Duschtassenelement.

Aus der EP 1 287 213 B9 ist eine sogenannte Entwässerungsrinne bekannt, die vorrangig in häuslichen Bädern im Bereich einer bodengleichen, mit Bodenfliesen ausgestatteten Dusche eingesetzt wird. Solche länglichen rinnenförmigen Entwässerungselemente bieten gegenüber herkömmlichen relativ kleinen Bodenabläufen mehrere Vorteile. Zum einen entwässert eine solche Entwässerungsrinne die Duschfläche wesentlich schneller als ein herkömmlicher Bodenablauf. Die duschende Person steht somit nicht länger als nötig im Duschwasser. Zudem muss eine Duschrinne nicht grundsätzlich in der Mitte der Duschfläche angeordnet werden, so dass der Nutzer beim Duschen nicht unmittelbar mit dem Duschrost der Duschrinne in Berührung kommt. Herkömmliche Bodenabläufe werden zwecks guter Entwässerung in der Regel mittig angeordnet. Darüber hinaus kann eine Duschrinne (Entwässerungsrinne) auch zum Beispiel im Bereich einer gläsernen Duschtür oder Duschabtrennung angeordnet werden und somit verhindern, dass Duschwasser unter der üblicherweise verwendeten Dichtleiste der Duschtür bzw. Silikonfuge der Duschabtrennung hinwegfließen kann.

Um die Entwässerungsleistung einer Duschrinne vollständig zu nutzen, ist es wichtig, dass der Duschplatz in Richtung der Duschrinne mit Gefälle auszubilden. Dies wird herkömmlicherweise durch eine entsprechende Estrichneigung bewerkstelligt. Das Herstellen einer funktionsgerechten Estrichneigung gestaltet sich jedoch oftmals aufwendig und dementsprechend schlecht reproduzierbar. Außerdem obliegt das Herstellen der Neigung in der Regel dem Estrichleger. Das bedeutet, dass der Installateur die Verantwortung für das ordnungsgemäße Funktionieren einer Duschrinnenentwässerung ungünstigerweise an den Estrichleger abgibt.

Aus der DE 200 08 180 U1 ist ein aus wasserdichtem und wasserfesten Tragschaum bestehender Duschwannenträger bekannt, in den mittig ein herkömmlicher kreisförmiger Bodenablauf mit einem Geruchverschluss und ein Abflussrohr eingeschäumt sind. Auf dem Duschwannenträger ist eine rechteckige Auffangwanne angeordnet, die im Bereich des Ablaufs eine Durchlassöffnung aufweist, deren Ränder mittels einer ringförmigen Dichtung dicht mit dem Ablauf verbunden sind. Die rechteckige Auffangwanne ist durch die beiden Diagonalen in vier zum Ablauf geneigte Sektoren unterteilt. Ungünstig ist bei dieser Konstruktion unter anderem, dass die auf der Auffangwanne vorgesehenen Fliesen oder Natursteinplatten mehrfach geschnitten werden müssen, und zwar zumindest an den beiden Diagonalen der Auffangwanne. Das passgenaue Schneiden der Fliesen bzw. Natursteinplatten ist eine schwierige Arbeit, die oftmals nicht auf Anhieb gelingt und zu erheblichem Verschnitt führt.

Aus der DE 101 31 338 A1, die als nächstliegender Stand der Technik angesehen werden kann, ist ein aus einem Hartschaumstoff bestehendes Duschbodenelement bekannt, das einen im Wesentlichen mittig angeordneten Ablauf aufweist. Der Ablauf ist aus einem im Wesentlichen quadratischen Abflussrahmen gebildet, der beispielsweise als Spritzgussteil hergestellt ist. Zur Aufnahme des Abflussrahmens ist das Duschbodenelement mittig mit einer im Grundriss runden Öffnung versehen, welche von einer ca. 10-12 mm tiefen quadratischen Ausfräsung umgeben ist. Damit das Duschbodenelement hohe Punktlasten aufnehmen kann, ist zugeordnet zu mindestens einer seiner Randkanten eine zur Oberseite hin offene Nut ausgebildet, die materialmäßig verstärkt ausgebildet ist.

Des Weiteren ist aus der US 2003/0033668 A1 eine Duschtasse aus polymerem Material mit Schäummittelzusätzen bekannt, die leicht in Richtung einer schmalen, länglichen Öffnung geneigt ist, durch die das Wasser in einen Sammelkanal fließen kann. Dieser Sammelkanal leitet das Wasser zu einer Ausnehmung, die sich in einer der Ecken der Duschtasse befindet, und dort in eine Ablaufvorrichtung. Sowohl die schmale, längliche Öffnung als auch der Sammelkanal sind in die Duschtasse eingeformt und somit einteilig mit der Duschtasse ausgebildet. Auf der Duschtasse sind zur Verbesserung der Rutschsicherheit kleine Rillen vorgesehen, durch die das Wasser zu der schmalen, länglichen Öffnung geführt wird.

Die US 2006/0191067 A1 offenbart eine duschtassenförmige Vorrichtung für sanitäre Einrichtungen, die aus zwei miteinander verbindbaren Bodenteilen zusammengesetzt ist, die über einen rinnenförmigen Sammelkanal miteinander verbunden werden, wobei der Sammelkanal eine Ablauföffnung aufweist und mit einer Einlaufschlitze definierenden Abdeckung versehen ist.

Die GB 2 315 211 A beschreibt eine barrierefreie Duschwanne mit einer wasserführenden Oberfläche, die so ausgebildet ist, dass sie über mindestens zwei Gefälleflächen das Wasser zu einem Abfluss leitet.

Die EP 1 630 309 A1 offenbart eine Duschrinne mit einer länglichen Bodenablaufrinne und einem darauf angeordneten Rostteil. Der Rostteil selbst besteht aus einem Rost und einer zweiten Ablaufrinne. Die Bodenablaufrinne weist einen Ablaufstutzen auf, in den ein an der zweiten Ablaufrinne ausgebildeter Ablaufstutzen einsteckbar ist. Zum Abdichten der Verbindung zwischen dem Rostteil und der Bodenablaufrinne ist eine Manschette vorgesehen, die in den Ablaufstutzen der Bodenablaufrinne eingesetzt wird und den an der zweiten Ablaufrinne ausgebildeten Ablaufstutzen aufnimmt.

Aufgabe der vorliegenden Erfindung ist es, den Aufbau barrierefreier bzw. bodengleicher Duschen zu erleichtern und die Dichtigkeit innerhalb des Duschtassenbereichs zu erhöhen sowie eine einfache Anpassung des Bodenablaufs an verschiedene Fliesenformate zu ermöglichen.

Diese Aufgabe wird erfindungsgemäß durch ein Duschtassenelement mit den Merkmalen des Anspruchs 1 gelöst.

Das erfindungsgemäße Duschtassenelement ist aus einem plattenförmigen Trägerelement aus Schaumstoff, insbesondere Hartschaumstoff gebildet. Das Trägerelement weist mindestens eine Aussparung auf, in die eine Duschrinne (Ablaufrinne) eingesetzt ist, wobei zumindest der Übergang von der Duschrinne zur Oberfläche des Trägerelementes mit einer am Rand der Duschrinne umlaufenden Abdichtung versehen ist, wobei die Duschrinne mit einem aufsetzbaren Rahmen und einem in den Rahmen einsetzbaren Rost versehen ist, wobei der Rahmen an mindestens zwei benachbarten und/oder einander gegenüberliegenden Seiten jeweils wenigstens einen Vorsprung aufweist, wobei die Vorsprünge dazu ausgebildet sind, bei auf die Duschrinne aufgesetztem Rahmen in die Duschrinne einzugreifen, und wobei die Vorsprünge so zueinander angeordnet sind, dass der auf die Duschrinne aufgesetzte Rahmen im Eingriffsbereich der Vorsprünge in mindestens einer im Wesentlichen horizontalen Richtung relativ zur Duschrinne um mindestens 10 mm verschiebbar ist. Das Trägerelement besitzt bei Auflage auf einen horizontalen Boden oder Untergrund an seiner Oberseite nur eine im Wesentlichen ebene, in Richtung der Aussparung geneigte Gefällefläche oder höchstens zwei im Wesentlichen ebene, in Richtung der Aussparung oder Aussparungen geneigte Gefälleflächen.

Durch das erfindungsgemäße Duschtassenelement wird die Herstellung bodengleicher Duschen erheblich erleichtert. Bei Verwendung des erfindungsgemäßen Duschtassenelements kann die Zahl der auszuführenden Schnitte bzw. sichtbaren Fugenschnitte in dem auf dem Trägerelement zu verlegenden Fliesen- oder Natursteinbelag auf ein Minimum reduziert werden. Zudem stellt das erfindungsgemäße Duschtassenelement die erforderliche Dichtigkeit innerhalb des Duschtassenbereichs sicher. Ferner ermöglicht die erfindungsgemäße Ausgestaltung des Duschtassenelements eine einfache Anpassung (Ausrichtung) des der Duschrinne zugeordneten Rahmens an verschiedene Fliesenformate, da der Rahmen in mindestens einer im Wesentlichen horizontalen Richtung relativ zur Duschrinne um mindestens 10 mm verschiebbar ist.

Eine vorteilhafte Ausgestaltung des erfindungsgemäßen Duschtassenelements sieht vor, dass der Rahmen höhenverstellbar in die Duschrinne einsteckbar ist. Diese Ausgestaltung ermöglicht eine oberflächenbündige Anpassung des Rahmens an unterschiedliche Fliesen- oder Natursteinplattendicken.

Vorzugsweise besteht die Duschrinne (Ablaufrinne) aus einem Rinnenmodul, welches eine muldenförmige Rinne mit einer Ablauföffnung aufweist. Der Rahmen wird auf das Rinnenmodul aufgesetzt , wobei ein die Duschrinne als solche nach oben abschließender Rost in den Rahmen eingesetzt wird.

Beim Aufsetzen des Rahmens auf das Rinnenmodul gelangen wenigstens zwei Vorsprünge, die an benachbarten und/oder an einander gegenüberliegenden Seiten des Rahmens angeordnet sind, in Eingriff mit der Rinne. Die Vorsprünge sind so zueinander angeordnet, dass der auf das Rinnenmodul aufgesetzte Rahmen im Eingriffsbereich der Vorsprünge um mindestens 10 mm in einer im wesentlichen horizontalen Richtung relativ zum Rinnenmodul verschiebbar ist. Es kommt daher nicht zu einem Reibschluss oder einem Verkeilen zwischen dem Rahmen und dem Rinnenmodul. Vielmehr sitzt der Rahmen locker auf dem Rinnenmodul auf und kann deshalb leicht in Richtung des einen oder des anderen Vorsprungs verschoben werden, bis einer der Vorsprünge an dem Rinnenmodul bzw. der Rinne zur Anlage kommt und dadurch ein weiteres Verschieben des Rahmens verhindert wird.

Im Ergebnis ist somit noch eine Justierung des Rahmens und damit des Rosts möglich. Mit anderen Worten kann zunächst der Einbau des Duschentassenelements unkompliziert und schnell erfolgen, da dessen Position nur in etwa mit einer vorbestimmten Einbauposition übereinstimmen muss. Dies wirkt sich jedoch nicht negativ auf die Optik und die Funktion der späteren bodengleichen Dusche aus, da anschließend über den Rahmen noch eine Feinjustierung vorgenommen werden kann. Besonders vorteilhaft ist es, dass die Feinjustierung des Rahmens sehr viel einfacher bewerkstelligt werden kann als eine Feinjustierung beim Einbau des Rinnenmoduls.

Bei Duschrinnen bodengleicher Duschen handelt es sich um solche einer länglichen Bauart mit zwei einander gegenüberliegenden Längsseiten und zwei einander gegenüberliegenden Querseiten. Dementsprechend ist dann sowohl das Rinnenmodul als auch der Rahmen und der Rost länglich ausgebildet, wobei jedes Bauteil entsprechende Längs- und Querseiten aufweist.

Im Zusammenhang mit länglichen Duschrinnen einer rechteckigen Bauart ist es bevorzugt, wenn der Rahmen einerseits an zwei einander gegenüberliegenden Längsseiten wenigstens zwei Vorsprünge aufweist, deren äußerer Abstand um mindestens 10 mm kleiner ist als die entsprechende Innenabmessung der Rinne, und andererseits an zwei einander gegenüberliegenden Querseiten wenigstens zwei Vorsprünge aufweist, deren äußerer Abstand um mindestens 10 mm kleiner ist als die entsprechende Innenabmessung der Rinne. Auf diese Weise ist ein Ausgleich oder eine Feinjustierung in einer Längsrichtung und noch dazu alternativ oder zusätzlich in einer Querrichtung möglich. Durch eine Überlagerung beider Bewegungsrichtungen kann der Rahmen auf dem Rinnenmodul bzw. in der Rinne in alle Richtungen parallel zu der Ebene des Bodens bewegt werden.

Bei einer weiter bevorzugten Ausführungsform des erfindungsgemäßen Duschtassenelements sind an dem Rahmen der Duschrinne umlaufende Vorsprünge vorgesehen. Stoßen die umlaufend angeordneten Vorsprünge an den Kanten des Rahmens aneinander, so ergibt sich letztlich ein einziger umlaufender Vorsprung, der sich aus den einzelnen Vorsprüngen ergibt. In diesem Fall wird eine größere Stabilität nicht nur der Vorsprünge, sondern auch des Rahmens erzielt, wodurch beispielsweise auch Materialkosten eingespart werden können.

Besonders bevorzugt ist es, wenn die Duschrinne einen Rinnenflansch und der Rahmen einen Rahmenflansch aufweisen, so dass der Rahmenflansch bei aufgesetztem Rahmen den Rinnenflansch zumindest teilweise überdeckt. Der Rahmen kann dann stets sicher auf dem Rinnenmodul der Duschrinne abgestützt werden, auch wenn der Rahmen aus der zentralen Lage bis in eine Randlage verschoben wird. Es versteht sich, dass die Breite des Rahmenflanschs dabei an die Differenz zwischen der Breite/Länge der Rinne und den äußeren Abstand der Vorsprünge angepasst ist.

Um nach dem Einbau des Duschtassenelements die Lage des Rosts der Duschrinne sowohl in einer Ebene parallel zum Boden als auch in einer Richtung senkrecht dazu anpassen zu können, sieht die Erfindung ferner vor, dass an dem Rahmen oder dem Rinnenmodul wenigstens ein Auflagemittel zur Höhenanpassung des Rahmens über dem Rinnenmodul angebracht werden kann. Bei einem derartigen Auflagemittel handelt es sich mit anderen Worten um eine Art Abstandshalter zwischen dem Rahmen und dem Rinnenmodul. Für den Fall, dass abweichend von einer ursprünglich geplanten Fliesendicke später dickere Fliesen oder dickere Platten aus Naturstein vorgesehen sind, wird die Höhe des abschließend aufgesetzten Rosts durch das wenigstens eine Auflagemittel, das zwischen dem Rinnenmodul und dem Rahmen vorgesehen wird, einfach angepasst. Der auf den Rahmen aufgesetzte Rost schließt dann bündig mit den Fliesen bzw. Natursteinplatten ab. Es versteht sich, dass das wenigstens eine Auflagemittel in diesem Fall Bestandteil des erfindungsgemäßen Duschtassenelements bzw. Bestandteil eines entsprechenden erfindungsgemäßen Duschtassensystems ist.

Eine besonders hohe Flexibilität wird erreicht, wenn die Duschrinne unterschiedliche, in ihren Abmessungen standardisierte Auflagemittel umfasst. Die Auflagemittel können bei dieser besonders bevorzugten Ausgestaltung der Erfindung an verschiedene, häufig verwendete oder standardisierte Fliesenstärken angepasst sein.

Hinsichtlich der Handhabung ist es bevorzugt, wenn das wenigstens eine Auflagemittel mit dem Rahmen oder dem Rinnenmodul verbunden werden kann bevor der Rahmen auf das Rinnenmodul aufgesetzt wird. Besonders bevorzugt ist es, wenn das Auflagemittel mit dem Rahmen oder dem Rinnenmodul ohne spezielles Werkzeug verrastbar ausgebildet ist. Ein ungewolltes Lösen des Auflagemittels wird durch das Verrasten verhindert.

Darüber hinaus bietet es sich an, dass der Rahmen oder das Rinnenmodul wenigstens eine Lippe zum Einrasten des wenigstens einen Auflagemittels aufweist. Eine derartige Lippe lässt sich konstruktiv einfach realisieren.

Wird die Lippe zudem im Wesentlichen umlaufend am Rahmen oder am Rinnenmodul vorgesehen, dann kann der Anwender vor Ort entscheiden, an welchen Stellen das oder die Auflagemittel vorgesehen werden. Zudem erhöht eine umlaufende Lippe die Biegesteifigkeit des Rahmens bzw. Rinnenmoduls.

Alternativ kann das wenigstens eine Auflagemittel auch derart ausgebildet sein, dass es an dem Rahmen oder Rinnenmodul reibschlüssig anklemmbar ist. Hierzu kann das Auflagemittel vorzugsweise einen Klemmschlitz aufweisen.

Bei einer bevorzugten Ausgestaltung weist das wenigstens eine Auflagemittel im Wesentlichen die Form eines Quaders auf. Das Auflagemittel besteht vorzugsweise aus Kunststoff. Um den Rost in die richtige Lage zu bringen, werden mehrere kompakte Auflagemittel an dem Rahmen oder dem Rinnenmodul vorgesehen, sodass der Rahmen stabil auf dem Rinnenmodul aufsitzt. Alternativ könnte natürlich auch ein umlaufendes Auflagemittel verwendet werden, das allerdings mehr Platz und Material erfordern würde und daher weniger bevorzugt ist.

In bevorzugter Ausgestaltung der Duschrinne weisen die Vorsprünge des Rahmens nach innen abgewinkelte Auskragungen zur Abstützung des Rosts auf. Der Rost wird dann auf die Auskragungen der Vorsprünge aufgesetzt, wobei der Rost seitlich vom Rahmen gehalten wird. Der Rost ist dabei vorzugsweise reibschlüssig im Rahmen eingefasst. Der Rost kann dadurch nicht versehentlich verrutschen und dennoch zu Reinigungszwecken leicht entnommen werden.

Weitere bevorzugte und vorteilhafte Ausgestaltungen des erfindungsgemäßen Duschtassenelements sind in den Unteransprüchen angegeben.

Nachfolgend wird die Erfindung anhand einer mehrere Ausführungsbeispiele darstellenden Zeichnung näher erläutert. Es zeigen:
- Fig. 1: eine perspektivische Ansicht eines plattenförmigen Trägerelements mit einer darin eingesetzten Duschrinne;
- Fig. 2: eine perspektivische Ansicht eines anderen plattenförmigen Trägerelements mit integrierter Duschrinne gemäß einem zweiten Ausführungsbeispiel;
- Fig. 3: eine längliche Duschrinne in einer perspektivischen Explosionsdarstellung; und
- Fig. 4: eine perspektivische Detailansicht eines Rostes einer Duschrinne.

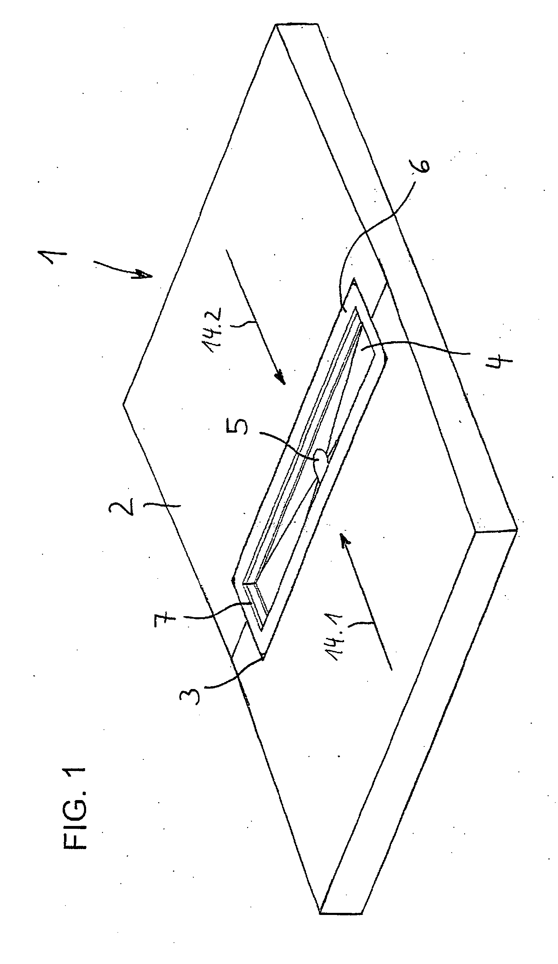

In Fig. 1 ist ein erfindungsgemäßes Duschtassenelement 1 schematisch dargestellt. Das Duschtassenelement 1 besteht im wesentlichen aus einem plattenförmigen, geschäumten Trägerelement 2 mit einer Aussparung 3, in die eine längliche Duschrinne 4 eingesetzt ist. Die Duschrinne 4 ist vorzugsweise aus Edelstahl oder Kunststoff hergestellt.

Bei dem plattenförmigen Trägerelement 2 handelt es sich um ein sogenanntes Duschboard, das üblicherweise aus Hartschaum, beispielsweise aus Styrolpolymerisat hergestellt ist. Die Oberseite des Trägerelements 2 ist in diesem Ausführungsbeispiel leicht V-förmig gemuldet ausgebildet. Die im Wesentlichen ebenen Muldenflanken sind in Richtung zur Aussparung 3 hin geneigt. Die Neigung der beiden Gefälleflächen (Muldenflanken) sind durch die Pfeile 14.1 und 14.2 gekennzeichnet. Die Aussparung 3 kann in dem Duschboard 2 insbesondere mittels geeigneter Schneidwerkzeuge hergestellt werden. Alternativ ist es auch möglich, die Aussparung 3 bereits bei der Herstellung des Duschboards, also beim Schäumvorgang auszubilden. Letzteres hat den Vorteil einer im wesentlichen abfallfreien Produktion, bei der das sonst für die Herstellung der Aussparung auszuschneidene Material eingespart wird.

Die in die Aussparung 3 eingesetzte längliche Duschrinne 4 weist in den dargestellten Ausführungsbeispielen einen trichterartigen Boden auf. Etwa in der Mitte des Rinnenbodens ist eine Ablauföffnung 5 ausgebildet, die vorzugsweise durch einen Ablaufstutzen gebildet ist.

Die Duschrinne 4 bzw. deren Rinnenkörper ist in die Aussparung 3 vorzugsweise eingeklebt.

Die Duschrinne 4 weist einen umlaufenden Flansch 6 auf, der im wesentlichen bündig mit der Oberfläche des Trägerelementes 2 abschließt. Die Oberfläche des Trägerelements 2 und der Rinnenflansch 6 sind mit einer Dichtungsfolie (nicht gezeigt), vorzugsweise einer flüssig aufgetragenen Dichtungsfolie beschichtet und somit abgedichtet. In diesem Zustand kann das erfindungsgemäße Duschtassenelement 1 bzw. 1' an den Installateur bzw. Endkunden verkauft werden.

Die Duschrinne 4 umfasst einen darin einsteckbaren Rahmen (nicht gezeigt) sowie einen in den Rahmen einlegbaren Rost (nicht gezeigt). Der Rahmen ist vorzugsweise höhenverstellbar und/oder seitenverstellbar in die Duschrinne 4 einsteckbar. Hierdurch kann die Duschrinne 4 bzw. deren Rost an unterschiedlichen Fliesen- oder Natursteinstärken bzw. an ein Fugengitter (Fliesenraster) angepasst werden. Um eine Höhenverstellung des Rahmens zu ermöglichen, weist der Rinnenkörper an seiner Innenwandung einen umlaufenden Absatz 7 auf, in den der Rahmen mit einem an seiner Unterseite ausgebildeten Kragen formschlüssig und/oder reibschlüssig eingreift. Der Installateur bzw. Kunde legt nach Einbau des Duschtassenelements 1 bzw. 1' den Rahmen auf die Duschrinne 4, richtet den Rahmen aus und verfliest das plattenförmige Trägerelement 2, 2'.

Das plattenförmige Trägerelement 2, 2' ist vorzugsweise so ausgebildet, dass es bei Auflage auf einen im wesentlichen horizontalen Boden oder Untergrund an seiner Oberseite ein Gefälle in Richtung der Aussparung 3, 3' aufweist.

Bei dem in Fig. 1 dargestellten Ausführungsbeispiel ist die Aussparung 3 mit der Duschrinne 4 etwa in der Mitte des Duschboards 2 angeordnet.

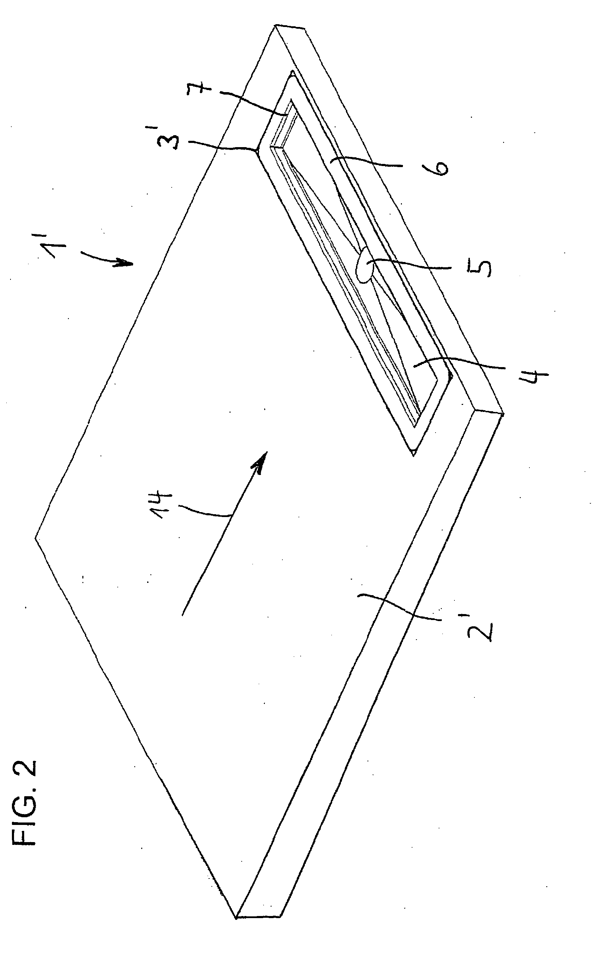

In dem in Fig. 2 schematisch gezeigten Ausführungsbeispiel ist dagegen die Aussparung 3' mit der Duschrinne 4 im Randbereich eines Duschboards 2' angeordnet. Das Trägerelement 2' ist in diesem Ausführungsbeispiel einkeilig ausgebildet. Die Richtung der zur Aussparung 3' hin geneigten Gefällefläche des Trägerelements 2' ist durch den Pfeil 14 gekennzeichnet.

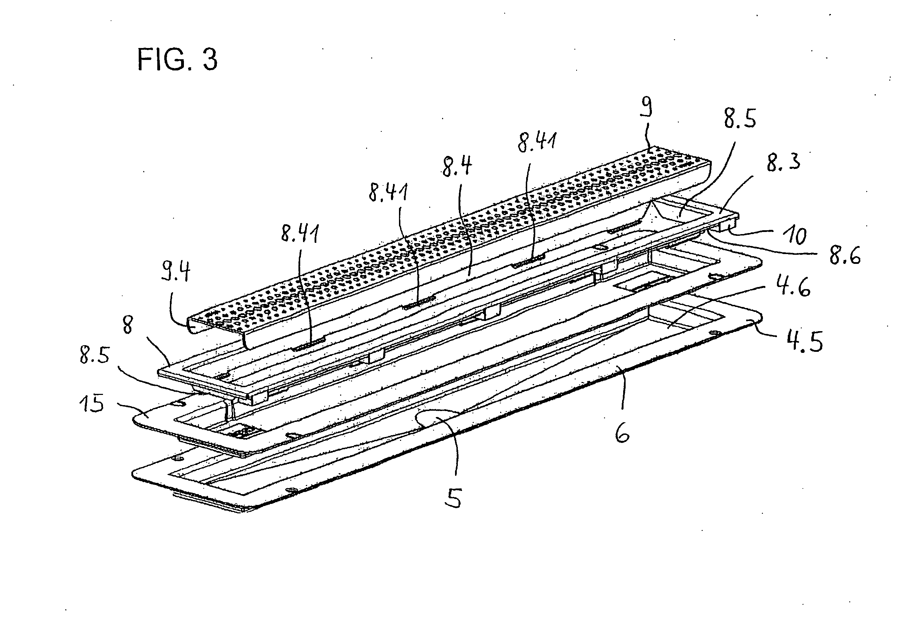

Fig. 3 zeigt die Einzelteile eines Systems zur Bildung einer Duschrinne 4 für bodengleiche Duschen. Eine solche Duschrinne 4 ist beispielsweise in die Aussparung 3, 3' des Trägerelements 2, 2' des erfindungsgemäßen Duschtassenelements 1, 1' eingesetzt (vgl. Figuren 1 und 2). Das System umfasst ein Rinnenmodul 4.5, einen Rahmen 8 und einen Rost 9, wobei an dem Rinnenmodul 4.5 ein Geruchverschluss (nicht gezeigt) angeschlossen ist bzw. anschließbar ist.

Mit 15 ist eine schalenförmige Abdeckung bezeichnet, die zum Schutz des Rinnenmoduls 4.5 vor einer Verstopfung durch Estrich, Mörtel oder andere Materialien während der Bauphase dient und den Rinnenflansch vor Verunreinigungen schützt. Hierzu wird die Abdeckung 15 formschlüssig in das Rinnenmodul 4.5 eingesetzt. Das Rinnenmodul 4.5 weist eine schalenförmige Rinne 4.6 mit einer Ablauföffnung 5 auf, wobei der Rinnenboden zur Ablauföffnung 5 hin mit Gefälle ausgebildet ist. An die Ablauföffnung 5 schließt sich ein Ablaufstutzen an. In die Ablauföffnung 5 bzw. den Ablaufstutzen ist ein Haarsieb (nicht gezeigt) einsetzbar .

Auf das längliche Rinnenmodul 4.5 kann nach Entfernen der Abdeckung 15 der Rahmen 8 aufgesetzt werden, der wie das Rinnenmodul 4.5 einen umlaufenden Flansch aufweist. Der Rinnenflansch 6 ist dabei breiter als der Rahmenflansch 8.3 ausgebildet. Der Rahmen 8 weist an seinen vier Innenseiten jeweils einen Vorsprung 8.4, 8.5 auf, der nach unten vorsteht und in die Rinne 4.6 des Rinnenmoduls eingreift, wenn der Rahmen 8 auf das Rinnenmodul 4.5 gesetzt wird.

Die längsseitigen Vorsprünge 8.4 des Rahmens 8 weisen nach innen abgewinkelte Auskragungen 8.41 auf, die der Abstützung des Rosts 9 dienen. Die zueinander beabstandeten Auskragungen 8.41 stehen zahnartig an den Vorsprüngen 8.4 vor. Der Rost 9 besitzt ein im Wesentlichen U-förmiges Querschnittsprofil mit einer gelochten Grundplatte 9.3 und zwei davon abgewinkelten, nach unten gerichteten Schenkeln 9.4, die vorzugsweise ungelocht sind. Im eingesetzten zustand wird der Rost 9 mit seinen Schenkeln 9.4 auf den Auskragungen 8.41 des Rahmens 8 abgestützt und gleichzeitig seitlich vom Rahmen 8 gehalten.

Zur Anpassung der Einbauhöhe des Rahmens 8 bzw. Rostes 9 an unterschiedliche Fliesenstärken bzw. unterschiedlich dicke Natursteinplatten sind mehrere Auflagemittel (Abstandselemente) 10 vorgesehen, die rings um den Rahmen 8 angeordnet und mit einer im Bereich des äußeren Randes des Rahmens 8 umlaufenden Lippe 8.6 verrastet sind.

Die Auflagemittel 10 haben im Wesentlichen die Form eines Quaders und sind aus Kunststoff gefertigt. Sie können allerdings auch eine andere geometrische Form aufweisen, beispielsweise die Form eines Zylinders. Sie weisen jeweils einen Schlitz auf, in den die Lippe 8.6 des Rahmens 8 bei der Verrastung eingreift. Alternativ kann auch eine reibschlüssige Klemmverbindung von Auflagemittel 10 und Rahmen 8 vorgesehen werden, wobei der Schlitz dann als Klemmschlitz für die darin einzusetzende Rahmenlippe 8.6 ausgeführt ist.

Im zusammengebauten Zustand der Duschrinne 4 liegen die Auflagemittel 10 auf dem Rinnenflansch 6 auf, so dass der Flansch 8.3 des Rahmens 8 etwas weiter von dem Rinnenmodul 4.5 nach oben beabstandet ist. Die Auflagemittel 10 können dabei in ihrer Dicke so gewählt werden, dass eine Anpassung an die jeweilige Dicke der vorgesehenen Bodenfliesen bzw. Natursteinplatten erzielt wird. Hierzu werden verschieden dicke Auflagemittel 10 der Duschrinne beigepackt, die beispielsweise eine Dicke von 4,5 mm, 7,5 mm, 10,5 mm und 13,5 mm aufweisen können.

Nach einer oberseitigen Abdichtung von Trägerelement 2, 2' und Rinnenflansch 6 mit Flüssigfolie wird der Rahmen 8 auf das Rinnenmodul 4.5 aufgesetzt. Da die äußeren Abstände der jeweils einander gegenüberliegenden Vorsprünge 8.4, 8.5 erheblich kleiner sind als die Breite bzw. die Länge der Rinne 4.6 des Rinnenmoduls 4.5, liegt der Rahmen 8 in gewissen Grenzen verschieblich auf dem Rinnenflansch 6 auf.

Dies ermöglicht dann eine Anpassung der Lage des Rahmens 8 bezüglich angrenzend verlegter Fliesen, ohne dass die Lage des Rinnenmoduls 4.5 nachträglich verändert werden muss. Es wird der Rahmen 8 einfach in die gewünschte Position gebracht, bevor dort dann der die Duschrinne 4 nach oben abschließende Rost 9 angebracht wird. Wie weit der Rahmen 8 verschoben werden kann, hängt letztlich von dem äußeren Abstand der Vorsprünge ab. Einige Millimeter, d.h. mindestens 10 mm sind hier jedoch zumeist ausreichend.

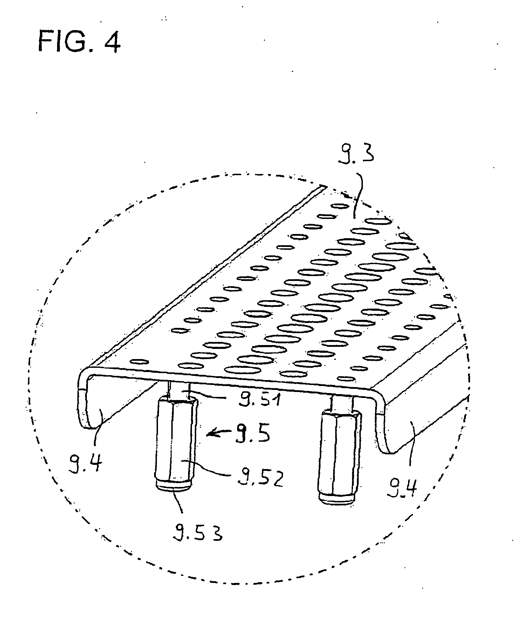

Die an den Vorsprüngen 8.4 des Rahmens 8 ausgebildeten Auskragungen 8.41 sind nicht zwingend erforderlich. Die vorliegende Erfindung umfasst auch die Alternative, den Rost 9 auf dem Boden der schalenförmigen Rinne 4.6 abzustützen. In diesem Fall ist der Rost 9 an seiner Unterseite mit mehreren, beispielsweise acht Stellfüßen versehen, auf denen der Rost 9 stabil in dem Rinnenmodul aufliegt (vgl. Fig. 4). Die Stellfüße 9.5 sind dabei höhenverstellbar am Rost 9 befestigt. Sie weisen eine an die Unterseite des Rosts 9 angeschweißte oder angeformte Gewindestange 9.51 auf, auf die eine hülsenförmige Sechskantmutter 9.52 aufgeschraubt ist. An der Unterseite der Sechskantmutter 9.52 ist eine abgerundete Auflagescheibe 9.53 angebracht

Das Niveau des Rosts 9 lässt sich mittels der Stellfüße 9.5 relativ zum Rinnenmodul 4.5 sowie zum Rahmen 8 justieren.

Die Erfindung ist in ihrer Ausführung nicht auf die vorstehend beschriebenen Ausführungsbeispiele beschränkt. Vielmehr sind eine Reihe von Varianten möglich, die auch bei abweichender Gestaltung von dem in den beigefügten Ansprüchen enthaltenen Erfindungsgedanken Gebrauch machen. So können zum Beispiel in dem plattenförmigen Trägerelement 2, 2' auch mehrere separat hergestellte Duschrinnen 4 integriert sein. Vorzugsweise können in dem Trägerelement zwei längliche, parallel zueinander verlaufende Duschrinnen 4 integriert sein, wobei die Duschrinnen dann an gegenüberliegenden Randbereichen des Trägerelements angeordnet sind. Das Trägerelement kann in diesem Fall insbesondere zweikeilig, d.h. sattelförmig ausgebildet sein, und weist dann zwei Gefälleflächen auf. Auch kann das plattenförmige Trägerelement 2, 2', eine von einer rechteckigen Form abweichende Form aufweisen, z.B. eine runde, ovale oder polygonale Form besitzen. Auch ist es möglich, die Duschrinne 4 ohne Flansch 6 auszuführen.

## Patentansprüche

1. Duschtassenelement (1, 1') mit einem plattenförmigen Trägerelement (2, 2') aus Schaumstoff, insbesondere Hartschaumstoff, das mindestens eine Aussparung (3, 3') aufweist, **dadurch gekennzeichnet, dass** in die mindestens eine Aussparung (3, 3') eine längliche Duschrinne (4) eingesetzt ist, wobei das Trägerelement bei Auflage auf einen horizontalen Boden oder Untergrund an seiner Oberseite nur eine im wesentlichen ebene, in Richtung der Aussparung (3, 3') geneigte Gefällefläche oder höchstens zwei im wesentlichen ebene, in Richtung der Aussparung (3, 3') oder Aussparungen geneigte Gefälleflächen aufweist, wobei der Übergang von der Duschrinne (4) zur Oberfläche des Trägerelements (2, 2') mit einer am Rand der Duschrinne (4) umlaufenden Abdichtung versehen ist, wobei die Duschrinne (4) mit einem aufsetzbaren Rahmen (8) und einem in den Rahmen einsetzbaren Rost (9) versehen ist, wobei der Rahmen (8) an mindestens zwei benachbarten und/oder einander gegenüberliegenden Seiten jeweils wenigstens einen Vorsprung (8.4, 8.5) aufweist, wobei die Vorsprünge (8.4, 8.5) dazu ausgebildet sind, bei auf die Duschrinne (4) aufgesetztem Rahmen (8) in die Duschrinne einzugreifen, und wobei die Vorsprünge (8.4, 8.5) so zueinander angeordnet sind, dass der auf die Duschrinne aufgesetzte Rahmen (8) im Eingriffsbereich der Vorsprünge (8.4, 8.5) in mindestens einer im Wesentlichen horizontalen Richtung relativ zur Duschrinne (4) um mindestens 10 mm verschiebbar ist.

2. Duschtassenelement nach Anspruch 1,
**dadurch gekennzeichnet, dass**
die Duschrinne (4) in die Aussparung (3, 3') eingeklebt ist.

3. Duschtassenelement nach Anspruch 1 oder 2,
**dadurch gekennzeichnet, dass**
die Duschrinne einen Flansch (6) aufweist, wobei die Oberfläche des Trägerelements (2, 2') und der Flansch (6) mit einer Dichtungsfolie, vorzugsweise einer flüssig aufgetragenen Dichtungsfolie beschichtet sind.

4. Duschtassenelement nach Anspruch 3,
**dadurch gekennzeichnet, dass**
der Flansch (6) der Duschrinne im Wesentlichen bündig mit der Oberfläche des Trägerelementes (2, 2') abschließt.

5. Duschtassenelement nach einem der Ansprüche 1 bis 4,
**dadurch gekennzeichnet, dass**
der Rahmen (8) höhenverstellbar in die Duschrinne (4) einsteckbar ist.

6. Duschtassenelement nach einem der Ansprüche 1 bis 5,
**dadurch gekennzeichnet, dass**
das Trägerelement (2, 2') mehrere Aussparungen (3, 3') aufweist, in denen jeweils eine Duschrinne (4) eingesetzt ist.

7. Duschtassenelement nach einem der Ansprüche 1 bis 6,
**dadurch gekennzeichnet, dass**
das Trägerelement (2, 2') einkeilig oder zweikeilig ausgebildet ist.

8. Duschtassenelement nach Anspruch 1 oder 2,
**dadurch gekennzeichnet, dass**
die Duschrinne (4) einen Rinnenflansch (6) und der Rahmen (8) einen Rahmenflansch (8.3) aufweist, wobei der Rahmenflansch (8.3) bei aufgesetztem Rahmen (8) den Rinnenflansch (6) zumindest teilweise überdeckt.

9. Duschtassenelement nach einem der Ansprüche 1 bis 8,
**dadurch gekennzeichnet, dass** an dem Rahmen (8) oder der Duschrinne (4) wenigstens ein Auflagemittel (10), zur Höhenanpassung des Rahmens (8) über der Duschrinne (4) vorgesehen ist.

10. Duschtassenelement nach Anspruch 9,
**dadurch gekennzeichnet, dass** das wenigstens eine Auflagemittel (10) mit dem Rahmen (8) oder der Duschrinne (4) verrastbar ist.

11. Duschtassenelement nach Anspruch 9 oder 10,
**dadurch gekennzeichnet, dass** der Rahmen (8) oder die Duschrinne (4) wenigstens eine Lippe (8.6) zum Einrasten des wenigstens einen Auflagemittels (10). aufweist.

12. Duschtassenelement nach Anspruch 9,
**dadurch gekennzeichnet, dass** das wenigstens eine Auflagemittel (10) an dem Rahmen (8) oder der Duschrinne (4) als reibschlüssige Klemmverbindung vorgesehen ist.

13. Duschtassenelement nach Anspruch 12,
**dadurch gekennzeichnet, dass** das wenigstens eine Auflagemittel (10) einen Klemmschlitz aufweist.

14. Duschtassenelement nach einem der Ansprüche 9 bis 13,
**dadurch gekennzeichnet, dass** das wenigstens eine Auflagemittel (10) im Wesentlichen die Form eines Quaders oder Zylinders aufweist.

15. Duschtassenelement nach einem der Ansprüche 1 bis 14,
**dadurch gekennzeichnet, dass**
die Vorsprünge (8.4) des Rahmens (8) nach innen abgewinkelte Auskragungen (8.41) zur Abstützung des Rosts (9) aufweisen.

16. Duschtassenelement nach einem der Ansprüche 1 bis 15,
**dadurch gekennzeichnet, dass**
der Rost (9) mit höhenverstellbaren Füßen (9.5) versehen ist, über die er in der Duschrinne (4) abgestützt ist.

## Claims

1. Shower tray element (1,1') comprising a plate-shaped carrier element (2, 2') made of foam material, in particular rigid foam material, and having at least one recess (3, 3'), **characterized in that** a longitudinal shower channel (4) is inserted into the recess (3, 3'), the carrier element, when laid on a horizontal floor or bottom, having on its top surface only one substantially flat sloping surface inclined towards the recess (3, 3') or at most two substantially flat sloping surfaces inclined towards the recess (3, 3') or recesses, the transition from the shower channel (4) to the surface of the carrier element (2, 2') being provided with a circumferential seal around the edge of the shower channel (4), the shower channel (4) being provided with an attachable frame (8) and a grate (9) which can be inserted into the frame, the frame comprising on each of at least two adjacent and/or opposing sides at least one projection (8.4,8.5), the projections (8.4, 8.5) being formed for engagement with the shower channel when the frame (8) is attached to the shower channel (4), and the projections (8.4, 8.5) being arranged such with respect to one another that the frame (8), when attached to the shower tray, can be displaced by at least 10 mm in a substantially horizontal direction with respect to the shower channel (4) in the area of engagement of the projections (8.4, 8.5).

2. Shower tray element according to claim 1, **characterized in that** the shower channel (4) is glued into the recess (3,3').

3. Shower tray element according to claim 1 or claim 2, **characterized in that** the shower channel comprises a flange (6), wherein the surface of the carrier element (2, 2') and the flange (6) are coated with a sealing film, preferably a sealing film applied in a liquid state.

4. Shower tray element according to claim 3, **characterized in that** the flange (6) of the shower channel is substantially flush with the surface of the carrier element (2, 2').

5. Shower tray element according to any one of claims 1 to 4, **characterized in that** the frame (8) can be inserted into the shower channel (4) in a height-adjustable manner.

6. Shower tray element according to any one of claims 1 to 5, **characterized in that** the carrier element (2, 2') comprises multiple recesses (3, 3') into each of which a shower channel (4) is inserted.

7. Shower tray element according to any one of claims 1 to 6, **characterized in that** the carrier element (2, 2') is formed in a single-wedge or double-wedge shape.

8. Shower tray element according to claim 1 or claim 2, **characterized in that** the shower channel (4) comprises a channel flange (6) and the frame (8) comprises a frame flange (8.3), the frame flange (8.3) overlapping the channel flange (6) at least partly when the frame (8) is attached.

9. Shower tray element according to any one of claims 1 to 8, **characterized in that** at least one supporting means (10) for height adjustment of the frame (8) above the shower channel (4) is provided on the frame (8) or the shower channel (4).

10. Shower tray element according to claim 9, **characterized in that** the at least one supporting means (10) can be lockingly engaged with the frame (8) or the shower channel (4).

11. Shower tray element according to claim 9 or claim 10, **characterized in that** the frame (8) or the shower channel (4) have at least one lip (8.6) for locking engagement of the at least one supporting means (10).

12. Shower tray element according to claim 9, **characterized in that** the at least one supporting means (10) is provided on the frame (8) or the shower channel (4) as a frictionally engaged clamping connection.

13. Shower tray element according to claim 12, **characterized in that** the at least one supporting means (10) comprises a clamping slot.

14. Shower tray element according to any one of claims 1 to 13, **characterized in that** the at least one supporting means (10) substantially has the shape of a parallelepiped or cylinder.

15. Shower tray element according to any one of claims 1 to 14, **characterized in that** the projections (8.4) of the frame (8) have inwardly angled protrusions for supporting the grate (9).

16. Shower tray element according to any one of claims 1 to 15, **characterized in that** the grate is provided with height-adjustable legs (9.5) which support it in the shower channel (4).

## Revendications

1. Bac de douche (1,1') qui comprend un élément de support en forme de plateforme (2,2) qui est réalisé en mousse, en particulier en mousse dure, et est doté d'au moins unévidement(3, 3), **caractérisé en ce que** une rigole de douche (4) de forme allongée est installée dans l'évidement (3, 3')au moins prévu,sachant que l'élément de support, lorsqu'il est posé sur un sol ou un fond horizontal, ne présente, sur sa face supérieure, qu'une surface en pente, sensiblement plane, inclinée dans la direction de l'évidement (3, 3') ou au plus deux surfaces en pente, sensiblement planes, inclinées dans la direction de l'évidement ou des évidements (3, 3'), sachant que le raccordement de la rigole de douche (4) à la face supérieure de l'élément de support (2, 2') est doté d'un joint d'étanchéité continu, sachant que la rigole de douche (4) est dotée d'un cadre (8) amovible et d'une grille (9) pouvant être insérée dans le cadre (8), ledit cadre (8) étant pourvu, sur chacun d'au moins deux côtés voisins et/ou opposés l'un à l'autre, d'au moins une saillie (8.4, 8.5), sachant que les saillies (8.4, 8.5) sont configurées pour s'engager dans la rigole de douche quand le cadre (8) est placé sur ladite rigole de douche (4), et sachant que les saillies (8.4, 8.5) sont disposées l'une par rapport à l'autre de telle manière que le cadre (8), placé sur la rigole de douche, puisse être poussé d'au moins 10 mm dans au moins une direction sensiblement horizontale par rapport à la rigole de douche (4), dans la région de prise des saillies (8.4, 8.5).

2. Bac de douche selon la revendication 1,
**caractérisé en ce que** la rigole de douche (4) est collée dans l'évidement (3, 3').

3. Bac de douche selon revendication 1 ou 2,
**caractérisé en ce que** la rigole de douche est dotée d'une bride (6), sachant que la face supérieure de l'élément de support (2, 2') et la bride (6) sont revêtus d'une feuille d'étanchéité, de préférence d'une feuille d'étanchéité à application liquide.

4. Bac de douche selon la revendication 3,
**caractérisé en ce que** la bride (6) de la rigole de douche est sensiblement à fleur de la surface de l'élément de support (2, 2').

5. Bac de douche selon l'une des revendications 1 à 4,
**caractérisé en ce que** le cadre (8) peut être inséré dans la rigole de douche, en étant réglable en hauteur.

6. Bac de douche selon l'une des revendications 1 à 5,
**caractérisé en ce que** l'élément de support (2, 2') est doté de plusieurs évidements (3, 3') dans chacun desquels une rigole de douche (4) peut être insérée.

7. Bac de douche selon l'une des revendications 1 à 6,
**caractérisé en ce que** l'élément de support (2, 2') est configuré en forme d'une clavette ou en forme de deux clavettes.

8. Bac de douche selon revendication 1 ou 2,
**caractérisé en ce que** la rigole de douche (4) est dotée d'une bride de rigole (6) et le cadre (8) d'une bride de cadre (8.3), sachant que la bride de cadre (8.3) recouvre, au moins partiellement, la bride de rigole (6) lorsque le cadre (8) est installé.

9. Bac de douche selon l'une des revendications 1 à 8,
**caractérisé en ce que**, sur le cadre (8) ou sur la rigole de douche (4), est prévu au moins un moyen d'appui (10) pour l'adaptation de la hauteur du cadre (8) au-dessus de la rigole de douche (4).

10. Bac de douche selon la revendication 9,
**caractérisé en ce que** le moyen d'appui (10) au moins prévu peut être enclenché avec le cadre (8) ou avec la rigole de douche (4).

11. Bac de douche selon revendication 9 ou 10,
**caractérisé en ce que** le cadre (8) ou la rigole de douche (4) est doté d'au moins une lèvre (8.6) pour le blocage du moyen d'appui (10) au moins prévu.

12. Bac de douche selon la revendication 9,
**caractérisé en ce que** le moyen d'appui (10) au moins prévu est agencé sur la cadre (8) ou sur la rigole de douche (4) en tant que liaison à serrage par friction.

13. Bac de douche selon la revendication 12,
**caractérisé en ce que** le moyen d'appui (10) est doté d'une fente de serrage.

14. Bac de douche selon l'une des revendications 9 à 13,
**caractérisé en ce que** le moyen d'appui (10) au moins prévu présente sensiblement la forme d'un quadrilatère ou d'un cylindre.

15. Bac de douche selon l'une des revendications 1 à 14,
**caractérisé en ce que** les saillies (8.4) du cadre (8) sont dotées de saillies (8.41) coudées vers l'intérieur pour soutenir la grille (9).

16. Bac de douche selon l'une des revendications 1 à 15,
**caractérisé en ce que** la grille (9) est pourvue de pieds réglables en hauteur (9.5) par l'intermédiaire desquels elle prend appui dans la rigole de douche (4).
